(19) Europäisches Patentamt
European Patent Office
Office européen des brevets

(11) **EP 3 842 755 B1**

(12) **EUROPEAN PATENT SPECIFICATION**

(45) Date of publication and mention
of the grant of the patent:
**18.02.2026 Bulletin 2026/08**

(21) Application number: **19851366.5**

(22) Date of filing: **16.08.2019**

(51) International Patent Classification (IPC):
**G01C 21/32** (2006.01) **G06T 7/73** (2017.01)

(52) Cooperative Patent Classification (CPC):
**G06T 7/73; G06V 20/588;** G01C 21/3819;
G01C 21/3848; G06T 2207/30244;
G06T 2207/30256

(86) International application number:
**PCT/CN2019/100905**

(87) International publication number:
**WO 2020/038285 (27.02.2020 Gazette 2020/09)**

(54) **LANE LINE POSITIONING METHOD AND DEVICE, STORAGE MEDIUM AND ELECTRONIC DEVICE**

VERFAHREN UND VORRICHTUNG ZUR POSITIONSBESTIMMUNG EINER FAHRSPUR, SPEICHERMEDIUM UND ELEKTRONISCHE VORRICHTUG

DISPOSITIF ET PROCÉDÉ DE POSITIONNEMENT DE LIGNES DE VOIE, SUPPORT DE STOCKAGE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.08.2018 CN 201810949717**

(43) Date of publication of application:
**30.06.2021 Bulletin 2021/26**

(73) Proprietor: **Tencent Technology (Shenzhen)
Company Limited
Shenzhen, Guangdong, 518057 (CN)**

(72) Inventor: **MA, Yanhai
Shenzhen, Guangdong 518057 (CN)**

(74) Representative: **Novagraaf International SA
Chemin de l'Echo 3
1213 Onex, Geneva (CH)**

(56) References cited:
CN-A- 101 183 008    CN-A- 106 289 275
CN-A- 106 525 057    CN-A- 106 525 057
CN-U- 203 772 282    US-A1- 2018 188 059

• ANONYMOUS: "Machine Translation of CN106525057A - "GENERATION SYSTEM FOR HIGH-PRECISION ROAD MAP"", 22 March 2017 (2017-03-22), XP055833660, Retrieved from the Internet <URL:https://translate.google.com/>
• SUKKARIEH ET AL: "Low cost, high integrity, aided inertial navigation systems for autonomous land vehicles", 1 March 2000 (2000-03-01), XP009529563, Retrieved from the Internet <URL:https://ses.library.usyd.edu.au/bitstream/handle/2123/18358/salah_sukkarieh_low_cost-SukkairiehSalah_2000.pdf>
• SCHERZINGER ET AL: "Precise Robust Positioning with Inertially Aided RTK", NAVIGATION: JOURNAL OF THE INSTITUTE OF NAVIGATION, INSTITUTE OF NAVIGATION, FAIRFAX, VA, US, vol. 53, no. 2, 1 September 2006 (2006-09-01), pages 73 - 84, XP056013478, ISSN: 0028-1522
• YU, JIYANG: "Research on Data Processing and Fusion Method of Petroleum Pipeline Mapping", CHINA MASTER'S THESES , no. 3, 31 March 2018 (2018-03-31), pages 1 - 81, XP009523051, ISSN: 1674-0246

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This application claims priority to Chinese Patent Application No. 201810949717.9, filed with the China Patent Office on August 20, 2018 and entitled "LANE LINE POSITIONING METHOD AND DEVICE, STORAGE MEDIUM AND ELECTRONIC DEVICE".

FIELD

The present disclosure relates to the field of maps, and in particular to lane line positioning technologies.

BACKGROUND

Digital maps are generally road maps in form. The scope of the road map is generally limited to outdoor roadways, and the precision of the road map is mostly at a road level. An amount of information that can be provided in the road map is extremely limited, so that the road map can only be used for outdoor navigation and inaccurate positioning, which has a limited driving assistance effect on a driver and cannot meet requirements of a vehicle for accurate positioning and navigation, for example, positioning requirements at a lane line level required for automatic driving and even more accurate positioning requirements.

The existing map data can be only for identifying the map, are not closely enough associated with actual vehicle applications, and have difficulty in adapting to a future development direction of vehicles such as driving assistance and unmanned driving. Therefore, a high-precision map needs to be created. The creating of a lane line in the high-precision map in the related art mostly relies on manual surveying and mapping and manual processing, which has the following disadvantages.

1) A positioning method used in a surveying process often relies on the Global Positioning System (GPS), to provide an accurate positioning result. Due to a limitation of a communication distance to a base station, the positioning method can be applied only within a specific range near the base station and in a scenario such as the open air, in which obtaining of a GPS signal is not affected. According to the GPS-based positioning method, in the case of creating a map in a closed or semi-closed scenario such as an indoor parking place, a solution of creating a lane line in a map based on the GPS positioning is not feasible since no GPS signal exists (an identifier such as a lane line cannot be accurately positioned) or the GPS signal is weak (a relatively large deviation exists in a measured positioning result). In this case, a drawn lane line has a relatively large deviation or the lane line cannot be drawn at all, and high-efficiency and low-cost map creation cannot be implemented. Patent document No. CN 106525057A discloses a system for generating a road map, in which coordinates of road elements are determined based on coordinates of two pairs of vehicle-mounted cameras and coordinates of a trace of a collecting vehicle.

2) Operations of the manual surveying and mapping are complex and are likely to have errors, and manual correction efficiency is low, so that it is difficult to applying the manual surveying and mapping to creation of large-scale and city-level maps.

For the foregoing problems, no effective solution has been provided yet.

SUMMARY

There are provided a lane line positioning method and a lane line positioning apparatus, a storage medium, and an electronic device according to embodiments of the present disclosure, to resolve at least the technical problem in the related art that a position of a lane line in a map cannot be accurately determined.

According to an aspect of the embodiments of the present disclosure, a lane line positioning method is provided. The method is defined in claim 1.

According to another aspect of the embodiments of the present disclosure, a lane line positioning apparatus is further provided. The apparatus is defined in claim 11.

According to another aspect of the embodiments of the present disclosure, a storage medium is further provided. The storage medium stores a program. The program, when executed, causes the foregoing method to be performed.

According to another aspect of the embodiments of the present disclosure, an electronic device is further provided. The electronic device includes a memory, a processor, and a computer program that is stored on the memory and is executable by the processor. The processor is configured to execute the computer program to perform the foregoing method.

According to another aspect of the embodiments of the present disclosure, a computer program product is further provided. The computer program product includes an instruction. The instruction, when executed on a computer, causes the computer to perform the foregoing method.

In the embodiments of the present disclosure, the inertial information, the target traveling information and the first position of the vehicle are obtained. The inertial information is the information measured by the inertial measurement unit of the vehicle, the target traveling information is the traveling information of the vehicle acquired at the first time instant, and the first position is the position of the vehicle at the first time instant. The second position is determined according to the target traveling information and the first position, and the third position of the vehicle at a second time instant is determined based on the inertial information and the second position of the vehicle. The second time instant is later than the first time instant. The position of the lane line in the map is determined according to the third position and the relative position information. The relative position information is used for indicating the relative position relationship between the lane line detected by the vehicle and the vehicle. Since the inertial information does not rely on a GPS signal, even in a case that there is no GPS signal, the third position of the vehicle at a later time instant (that is, the second time instant) can be determined by using the second position and the inertial information of the vehicle, and then the position of the lane line in the map is determined according to the third position and the relative position relationship between the lane line and the vehicle, resolving the technical problem in the related art that the position of the lane line in the map cannot be accurately determined, and further achieving a technical effect of accurately positioning the lane line.

**BRIEF DESCRIPTION OF THE DRAWINGS**

The accompanying drawings described herein are used for providing further understanding of the present disclosure, and form a part of the present disclosure. Exemplary embodiments of the present disclosure and descriptions thereof are used for explaining the present disclosure, and do not constitute any inappropriate limitation to the present disclosure. In the accompanying drawings:

FIG. 1 is a schematic diagram of a hardware environment of a lane line positioning method according to an embodiment of the present disclosure;

FIG. 2 is a flowchart of a lane line positioning method according to an optional embodiment of the present disclosure;

FIG. 3 is a schematic diagram of a strapdown inertial navigation calculation module according to an optional embodiment of the present disclosure;

FIG. 4 is a schematic diagram of an original image of a lane according to an optional embodiment of the present disclosure;

FIG. 5 is a schematic diagram of an affine transformation graph of a lane according to an optional embodiment of the present disclosure;

FIG. 6 is a schematic diagram of a lane in a map according to an optional embodiment of the present disclosure;

FIG. 7 is a schematic diagram of a local map according to an optional embodiment of the present disclosure;

FIG. 8 is a schematic diagram of a lane in a map according to an optional embodiment of the present disclosure;

FIG. 9 is a schematic diagram of a lane line positioning apparatus according to an optional embodiment of the present disclosure; and

FIG. 10 is a structural block diagram of a terminal according to an embodiment of the present disclosure.

**DESCRIPTION OF EMBODIMENTS**

To make a person skilled in the art better understand solutions of the present disclosure, the technical solutions in the embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

It should be noted that, the terms such as "first" and "second" in the specification, the claims and the accompanying drawings of the present disclosure are intended to distinguish between similar objects, but are not necessarily used for describing a specific sequence or a precedence order. It should be understood that, the data termed in such a way are interchangeable in proper circumstances, so that the embodiments of the present disclosure described herein can be implemented in other orders than the order illustrated or described herein. In addition, the terms "include", "have", and any other variants are intended to cover the non-exclusive inclusion. For example, a process, method, system, product, or device that includes a series of steps or units is not necessarily limited to those steps or units explicitly listed, but may include other steps or units inexplicitly listed or inherent to such a process, method, product, or device.

First, some nouns or terms that appear in the description for the embodiments of the present disclosure are explained as follows.

Autonomous vehicles or Self-piloting automobiles, also referred to as unmanned automobiles, computer-driving automobiles, or wheeled mobile robots, are intelligent automobiles that implement unmanned driving by using a computer system.

A high-refinement map refers to a map having high precision and refinement definitions, in which lanes can only be distinguished in the case of the precision reaching a decimeter level. Nowadays, with the development of positioning technologies, high-precision positioning has become possible. Moreover, for the refinement definitions, various traffic elements in a traffic scene, including data such as road network data, lane network data, lane lines and traffic signs in a conventional map, are required to be stored in a formatted manner.

The simultaneous localization and mapping (SLAM) technology is also referred to as a Concurrent Mapping and Localization (CML) technology.

A Micro-Electro-Mechanical System (MEMS), also referred to as a micro electromechanical system, a micro system, a micro machine, or the like, refers to a high-tech apparatus having a size of a few millimeters or even a smaller size. An internal structure of the Micro-Electro-Mechanical System has a size generally at a micron or even a nanometer level. The Micro-Electro-Mechanical System is an independent intelligent system.

An Inertial Measurement Unit (IMU) is an apparatus configured to measure a triaxial attitude angle (or angular velocity) and acceleration of an object.

According to an aspect of the embodiments of the present disclosure, a method embodiment of a lane line positioning method is provided.

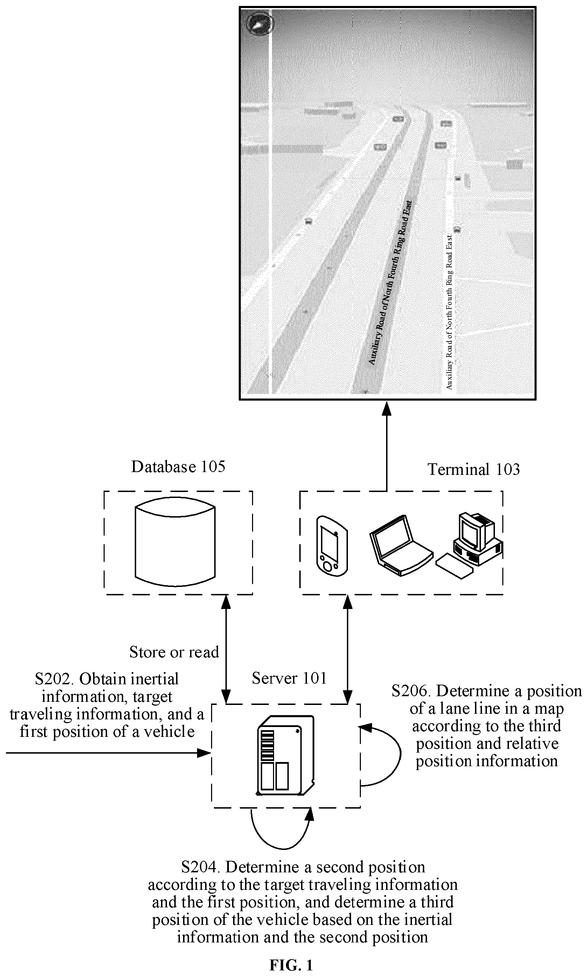

Optionally, in this embodiment, the foregoing lane line positioning method may be applied to a hardware environment, as shown in FIG. 1, including a server 101 and/or a terminal 103. As shown in FIG. 1, the server 101 is connected to the terminal 103 through a network, and is configured to provide a service (such as a game service, an application service, or a map service) for the terminal or a client installed on the terminal. A database 105 may be disposed on the server 101 or independently of the server 101, to provide a data storage service for the server 101. The foregoing network includes, but is not limited to, a wide area network, a metropolitan area network, or a local area network. The terminal 103 is an intelligent terminal that can be used on a vehicle, and is not limited to an in-vehicle device, a mobile phone, a tablet computer, or the like.

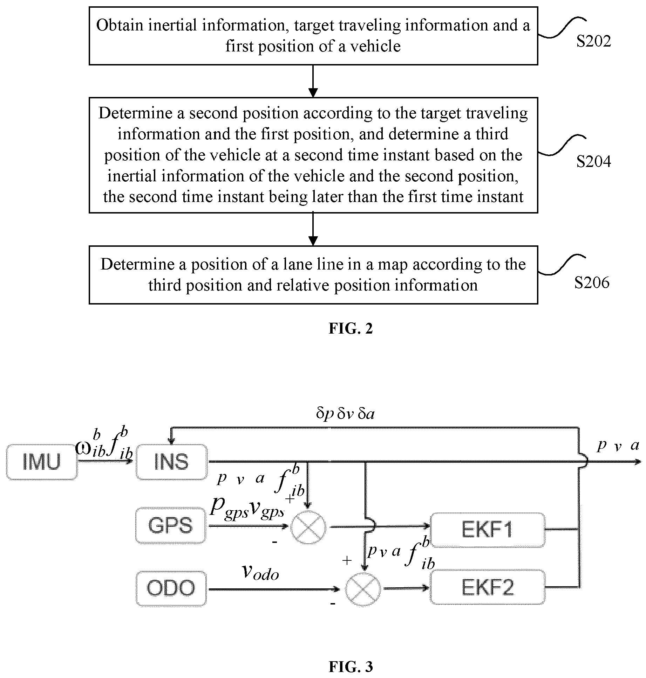

The lane line positioning method according to the embodiment of the present disclosure may be performed by the server 101. FIG. 2 is a flowchart of a lane line positioning method according to an optional embodiment of the present disclosure. As shown in FIG. 2, the method may include the following steps S202, S204 and S206.

In step S202, the server obtains inertial information, target traveling information and a first position of a vehicle.

The inertial information is information measured by an inertial measurement unit of the vehicle. The target traveling information is traveling information of the vehicle acquired at a first time instant. The first position is a position of the vehicle at the first time instant.

The foregoing inertial information is the information measured by the inertial measurement unit IMU of the vehicle, for example, information measured by an IMU including three uniaxial accelerometers and three uniaxial gyroscopes. The information may include acceleration information of an object in independent three axes of a vehicle coordinate system measured by the accelerometers, and angular velocity information of the vehicle relative to a navigation coordinate system measured by the gyroscopes.

The foregoing target traveling information is information generated or measured in traveling of the vehicle, for example, one or more of mileage information, velocity information, acceleration information, and positioning information. In a case that the vehicle is in a closed or semi-closed scenario, for example, in a bridge hole, a cave, or a parking place, the traveling information does not include the positioning information such as GPS information.

In step S204, the server determines a second position according to the target traveling information and the first position, and determines a third position of the vehicle at a second time instant based on the inertial information of the vehicle and the second position.

The second time instant is later than the first time instant. The third position of the vehicle at the second time instant later than the first time instant may be predicted according to the inertial information, the target traveling information, and the first position at the first time instant of the vehicle.

It should be noted that, in some cases, there is a relatively high real-time requirement for lane line positioning, but traveling information (for example, a position outputted by an odometer of the vehicle) outputted by a relevant instrument of the vehicle cannot meet the real-time requirement. For example, the real-time requirement is outputting a position per 0.01s, but the odometer updates the position per 2s. In these cases, target traveling information outputted by the instrument of the vehicle cannot be directly used, and instead, the first position is estimated in real time (for example, the first position is updated every 0.01s) according to the real-time requirement in the vehicle traveling. In this case, in order to further ensure accuracy of the first position and further ensure accuracy of lane line positioning, if the relevant instrument of the vehicle outputs the target traveling information, the server determining the second position according to the target traveling information and the first position may be implemented by correcting the first position estimated at a current time instant by using the target traveling information, to avoid an error caused by estimation performed between a previous correction and the current correction (equivalent to a cycle) from entering a next cycle between the current correction and a next correction, so that a subsequently estimated position is more accurate, in other words, the lane line can be positioned more accurately.

It should be noted that, in order to ensure completeness of the lane line positioning solution, if the relevant instrument of the vehicle does not output (or does not update) the target traveling information, the first position may be directly used as the second position in step S204, to determine the third position of the vehicle at the second time instant based on the inertial information of the vehicle and the second position.

In step S206, the server determines a position of a lane line in a map according to the third position and relative position information.

The relative position information is used for indicating a relative position relationship between a detected lane line and the vehicle. In other words, a position of the vehicle in the map may be determined according to the third position, the position of the lane line in the map may be determined according to the relative position relationship, and the lane line may be created at the position. In this solution, the third position of the vehicle is determined based on the inertial information and the target traveling information of the vehicle, and the position of the lane line in the map is determined according to the third position and the relative position relationship between the lane line and the vehicle, without relying on a GPS signal. Even if there is no GPS signal, the lane line positioning is still performed by using the inertial information of the vehicle.

In the foregoing embodiment, descriptions are made by taking the lane line positioning method according to the embodiment of the present disclosure being performed by the server 101 as an example. The lane line positioning method according to the embodiment of the present disclosure may be performed by the terminal 103, and an execution subject is the terminal 103 rather than the server 101, which is different from that in the foregoing embodiment. The lane line positioning method according to the embodiment of the present disclosure may also be performed by the server 101 and the terminal 103 together. One or two of step S202 to step S206 are performed by the server 101, and remaining steps are performed by the terminal 103. The lane line positioning method according to the embodiment of the present disclosure performed by the terminal 103 may also be performed by a client (for example, a client of a map creation application) installed on the terminal.

Through the foregoing steps S202 to S206, in order to further ensure accuracy of lane line positioning, the estimated first position of the vehicle at a certain time instant (that is, the first time instant) is corrected based on the target traveling information of the vehicle, to obtain the second position at which the vehicle is actually located, the third position of the vehicle at a later time instant (that is, the second time instant) is determined by using the second position and the inertial information of the vehicle, and then the position of the lane line in the map is determined according to the third position and the relative position relationship between the lane line and the vehicle, resolving the technical problem in the related art that the position of the lane line in the map cannot be accurately determined, and further achieving a technical effect of accurately positioning the lane line.

The technical solution of the present disclosure may be applied to a high-refinement map, where the lane line is very important map information in the high-refinement map. In the technical solution of the present disclosure, the lane line may be mapped in the high-refinement map based on the visual SLAM of a low-cost MEMS IMU. The technical solution of the present disclosure is described below in detail with reference to steps shown in FIG. 2.

In the technical solution provided in step S202, the server obtains the inertial information, the target traveling information and the first position of the vehicle. The inertial information is the information measured by the inertial measurement unit of the vehicle. The target traveling information is the traveling information of the vehicle acquired at the first time instant. The first position is the position of the vehicle at the first time instant.

Taking an IMU including three uniaxial accelerometers and three uniaxial gyroscopes as an example, the process of obtaining the inertial information, the target traveling information and the first position of the vehicle may be performed respectively for the following two cases.

In a case that a positioning signal (such as a GPS positioning signal or a Beidou positioning signal) exists, the obtained information includes: accelerations respectively measured by the accelerometers in three axis directions, angular velocities respectively measured by the gyroscopes in three axis directions, a velocity measured by the odometer, a position and an acceleration obtained through positioning, and the first position.

In a case that there is no positioning signal (for example, the vehicle is in a closed or semi-closed scenario such as a parking place, a bridge hole, or a cave), the obtained information includes: accelerations respectively measured by the accelerometers in three axis directions, angular velocities respectively measured by the gyroscopes in three axis directions, a velocity measured by the odometer, and the first position.

In the technical solution provided in step S204, the server corrects the first position by using the target traveling information, to obtain the second position, and determines the third position of the vehicle at the second time instant based on the inertial information of the vehicle and the second position, where the second time instant is later than the first time instant. In other words, the position of the vehicle at the second time instant later than the first time instant may be predicted according to the inertial information, the target traveling information, and the first position at the first time instant of the vehicle. At the frontend of the SLAM, information outputted by the MEMS IMU, a vehicle wheel speed, and differential GPS information are filtered by using a Kalman filter, to implement the function of the odometer. At the backend of the SLAM, a closed loop is implemented by using differential GPS data, and optimization is performed by using a pose graph, to eliminate an accumulated error of a trajectory of the odometer at the frontend.

In the foregoing embodiment, the process of correcting the first position by using the target traveling information to obtain the second position, and determining the third position of the vehicle at the second time instant based on the inertial information of the vehicle and the second position maybe performed by performing the following step 1 and step 2.

In step 1, a first information change value between first traveling information and the target traveling information is obtained.

The traveling information includes the first traveling information and the target traveling information. The first traveling information is determined according to inertial information of the vehicle at the first time instant. The first information change value is a traveling information change value of the vehicle at the first time instant.

Optionally, the process of obtaining the first information change value between the first traveling information and the target traveling information may be performed by performing the following step 11 and step 12.

In step 11, the first traveling information outputted by a strapdown inertial navigation calculation module according to inertial information of the vehicle at the first time instant and a second information change value is obtained, and the target traveling information is obtained.

The strapdown inertial navigation calculation module may determine the acceleration of the vehicle by using a multiaxial angular velocity (in an acceleration direction) and a multiaxial acceleration (an acceleration magnitude) at the second time instant, and correct the velocity at the first time instant calculated by an INS by using a velocity change value at the first time instant, to obtain an actual velocity. The strapdown inertial navigation calculation module calculates a mileage travelled in a time period t by using the actual velocity v and the acceleration a (according to an expression (vt + at2/2)). In this way, the third position is determined.

In this embodiment, the first traveling information includes a first velocity, an acceleration, and the position of the vehicle at the first time instant outputted by the strapdown inertial navigation calculation module. The second information change value is a traveling information change value of the vehicle at a third time instant. The third time instant is earlier than the first time instant.

Optionally, before obtaining the first traveling information outputted by the strapdown inertial navigation calculation module according to the inertial information of the vehicle at the first time instant and the second information change value, the second information change value is obtained. The second information change value includes a velocity change value of the vehicle at the third time instant determined by using a first filter, and a position change value and an acceleration change value of the vehicle at the third time instant that are determined by using a second filter. The third time instant is earlier than the first time instant.

In step 12, in a case that the vehicle is not communicably connected to a positioning system, a velocity change value between the first velocity in the first traveling information and a second velocity in the target traveling information at the first time instant, and a position change value between a position in the first traveling information and the first position at the first time instant are obtained.

The first information change value include the velocity change value at the first time instant and the position change value at the first time instant.

In this embodiment, in the case that the vehicle is not communicably connected to the positioning system, the process of obtaining the target traveling information of the vehicle acquired at the first time instant may be performed by obtaining a second velocity of the vehicle at the first moment and the position of the vehicle at the first time instant that are determined by the odometer of the vehicle.

In a case that the vehicle is communicably connected to the positioning system, the process of obtaining the target traveling information of the vehicle acquired at the first time instant may be performed by: obtaining the position of the vehicle at the first time instant and the acceleration of the vehicle at the first time instant that are determined by the positioning system, and obtaining a second velocity of the vehicle at the first time instant and the position of the vehicle at the first time instant that are determined by the odometer of the vehicle.

In step 2, the first position is corrected according to the first information change value to obtain the second position, and the third position is determined by using the second position and inertial information of the vehicle at the second time instant.

Optionally, in a case that the inertial information of the vehicle at the second time instant includes a multiaxial angular velocity of the vehicle at the second time instant and a multiaxial acceleration of the vehicle at the second time instant, and the first information change value includes a velocity change value at the first time instant and a position change value at the first time instant, the process of correcting the first position according to the first information change value, to obtain the second position, and determining the third position by using the second position and the inertial information of the vehicle at the second time instant may be performed by:

inputting the multiaxial angular velocity of the vehicle at the second time instant, the multiaxial acceleration at the second time instant, and the first information change value to the strapdown inertial navigation calculation module, to cause the strapdown inertial navigation calculation module to correct the first position by using the position change value at the first time instant, to obtain the second position, correct a velocity at the first time instant by using the velocity change value at the first time instant, determine an acceleration of the vehicle at the second time instant by using the multiaxial angular velocity at the second time instant and the multiaxial acceleration at the second time instant, and determine the third position by using the acceleration of the vehicle at the second time instant, the second position, and the corrected velocity at the first time instant; and

obtaining the third position of the vehicle at the second time instant outputted by the strapdown inertial navigation calculation module.

Referring to FIG. 3, the embodiment shown in step S204 may involve the following three stages (where t0 is earlier than t1, and t2 is later than t1).

At a stage 1, i.e., at the stage t0, the IMU outputs a triaxial angular velocity $\omega_{ib}^{b}$ and a triaxial acceleration $f_{ib}^{b}$ (equivalent to inertial information at the third time instant) at the current time instant. The INS outputs a position p, a velocity v, and an acceleration a at the current time instant according to $\omega_{ib}^{b}$ and $f_{ib}^{b}$ outputted by the IMU. The GPS outputs a position $p_{gps}$ and a velocity $v_{gps}$ obtained through positioning, to an EKF1 for filtering, that is, for comparison with outputs of the INS. Correspondingly, a velocity $v_{odo}$ outputted by the odometer enters an EKF2 for filtering. The two filters output a position error $\delta p$, a velocity error $\delta v$, and an attitude error $\delta a$ (equivalent to the second information change value at the third time instant) estimated through filtering to the INS, to correct errors of the ISN.

At a stage 2, i.e., at the stage t1, the IMU outputs a triaxial angular velocity $\omega_{ib}^{b}$ and a triaxial acceleration $f_{ib}^{b}$ (equivalent to inertial information at the first time instant) at the current time instant. The INS outputs a position p, a velocity v, and an acceleration a (that is, the first traveling information) at the current time instant according to $\omega_{ib}^{b}$ and $f_{ib}^{b}$ outputted by the IMU, and the position error $\delta p$, the velocity error $\delta v$, and the attitude error $\delta a$ (that is, the second information change value) obtained at the previous time instant. The GPS outputs a position $p_{gps}$ and a velocity $v_{gps}$ obtained through positioning to the EKF1 for filtering, that is, comparison with outputs of the INS. Correspondingly, a velocity $v_{odo}$ outputted by the odometer enters the EKF2 for filtering. The two filters output a position error $\delta p$, a velocity error $\delta v$, and an attitude error $\delta a$ (equivalent to the first information change value at the first time instant) estimated through filtering to the INS, to correct errors of the INS.

At a stage 3, i.e., at the stage t2, the IMU outputs a triaxial angular velocity $\omega_{ib}^{b}$ and a triaxial acceleration $f_{ib}^{b}$ (equivalent to inertial information at the second time instant) at the current time instant. The INS outputs a position p, a velocity v, and an acceleration a at the current time instant according to $\omega_{ib}^{b}$ and $f_{ib}^{b}$ outputted by the IMU, and the position error $\delta p$, the velocity error $\delta v$, and the attitude error $\delta a$ (that is, the first information change value) obtained at the previous time instant. A velocity $v_{odo}$ outputted by the odometer enters the EKF2 for filtering. The filter outputs a velocity error $\delta v$ (equivalent to the information change value at the second time instant) estimated through filtering to the INS, to correct errors of the INS at a next time instant.

The foregoing step 1 and step 2 may be performed cyclically. In a cycle, after performing step 1 and step 2, a first position at a later time instant may be determined according to a third position at a certain time instant. In a next (step 1 and step 2) cycle, the third position may be used as a new first position. It should be noted that, an initial first position may be a position obtained by positioning in the case of the GPS signal being good. That is, in the technical solution of the present disclosure, a subsequent position at which the vehicle is located in the case of the GPS signal being poor can be determined by using a positioning result in the case of the GPS signal being good in combination with the inertial navigation.

In the technical solution provided in step S206, the server determines the position of the lane line in the map according to the third position and the relative position information. The relative position information is used for indicating a relative position relationship between the detected lane line and the vehicle. In other words, a position of the vehicle in the map may be determined according to the third position, the position of the lane line in the map may be determined according to the relative position relationship indicated by the relative position information, and the lane line may be created at the position. For example, a relative spatial distance (the relative position information) of a lane line of a road relative to the vehicle may be obtained by performing lane line detection, affine transformation, and spatial measurement on an image of a monocular camera, and the distance is converted into a space point of a lane line as a landmark, serving as a local map.

Optionally, the process of determining the position of the lane line in the map according to the third position and the relative position information may be performed by performing the following step 1 to step 3.

In step 1, a lane line is recognized from a target image acquired by an image acquisition apparatus of the vehicle.

Optionally, for recognizing the lane line from the target image acquired by the image acquisition apparatus of the vehicle, affine transformation is performed on the target image by using an affine transformation matrix, to obtain an affine transformation graph of the target image. Parallel lines in the affine transformation graph are determined as lane lines.

An optional affine transformation matrix is shown as follows.

$$\begin{bmatrix} u_d \\ v_d \\ 1 \end{bmatrix} = \begin{bmatrix} m_{00} & m_{01} & m_{02} \\ m_{10} & m_{11} & m_{12} \\ m_{20} & m_{21} & m_{22} \end{bmatrix} \begin{bmatrix} u_s \\ v_s \\ 1 \end{bmatrix}$$

where $u_d$ and $v_d$ represent two-dimensional coordinates of a target point after transformation in a first coordinate system, $u_s$ and $v_s$ represent two-dimensional coordinates of the target point before the transformation in a second coordinate system,

and $\begin{bmatrix} m_{00} & m_{01} & m_{02} \\ m_{10} & m_{11} & m_{12} \\ m_{20} & m_{21} & m_{22} \end{bmatrix}$ represents a matrix by which a point in the second coordinate system is mapped to the first

coordinate system, where $m_{00}$ to $m_{22}$ indicate transformation parameters.

In step 2, relative position information between the lane line and the vehicle is obtained.

Optionally, in a case that the relative position information includes a relative distance between the lane line and the vehicle, the process of obtaining the relative position information between the lane line and the vehicle may be performed by obtaining a pixel distance between the lane line and the vehicle in the affine transformation graph, and determining the relative distance between the lane line and the vehicle by using a product of a scale factor (or referred to as a scaling factor, that is, a ratio of a size of an object in the graph to an actual size of the object) of the affine transformation and the pixel distance. For example, the relative distance may be expressed as a product of a pixel distance, a distance represented by a single pixel, and a reduction ratio.

In step 3, a fourth position to which the third position is mapped in the map is searched for. In step 4, a fifth position is determined in the map according to the fourth position and the relative position information, and the lane line is created at the fifth position.

For example, the relative position information includes the relative distance. In an actual scenario, the relative distance between the lane line and the vehicle is indicated by Y. In a case that the scaling ratio of the map is indicated by 1/X, the relative distance between the lane line and the vehicle in the map is expressed as Y/X, and a position relationship between the lane line and the vehicle in the map is the same as that in the actual scenario.

As an optional embodiment, the technical solution of the present disclosure is described below in detail by taking the technical solution of the present disclosure being applied to a high-refinement map as an example.

In the related technical solution, drawing of the lane line in the high-precision map may be implemented by the following two technical solutions. In a first technical solution, a traveling trajectory of a vehicle is obtained by the high-precision inertial navigation and the differential GPS, and then lane line detection and relative position extraction are performed by using a laser radar and a camera, and finally information about a traveling pose of the vehicle and information about the relative position between the vehicle and the lane line are fused to obtain a high-refinement map. In a second technical solution, a lane line in a high-refinement map is automatically extracted by the visual SLAM/laser SLAM. There may be multiple methods for implementing pure visual SLAM, including a feature point-based method, and a method in which an optical flow method is adopted at the frontend, and a graph optimization method is generally adopted at the backend. In the method based on the laser SLAM, a point-line-plane matching method is generally adopted at the frontend, and the graph optimization method is generally adopted at the backend.

The first technical solution has the following disadvantages. In scenarios such as a shelter and a tunnel in which the GPS information is not available, for example, in a case that the vehicle is in an underground garage or in a relatively long tunnel or there are complex internal turnings, trajectory precision is poor, and the established high-refinement map cannot be used in this case. Further, costs of the use of the high-precision inertial navigation and a surveying and mapping level laser radar are extremely high. In addition, the solution is only applicable to off-line mapping, and is inapplicable to on-line mapping.

The second technical solution has the following disadvantages. The calculation at the frontend performed based on the visual SLAM and the laser SLAM is greatly affected by an environment. Specifically, the visual SLAM is affected by a light change, resulting in that effective feature points cannot be extracted or feature point tracking fails. Further, dynamic environments such as a vehicle and a pedestrian traveling on the road have relatively large effect on the visual SLAM and the laser SLAM, resulting in that the SLAM calculation at the frontend is unstable. In addition, the visual SLAM is affected by the environment, which may result in errors of closed-loop detection. In the case of the laser SLAM, loop-back detection generally cannot be implemented by relying on only point cloud information, and thus closed-loop optimization cannot be performed. Therefore, backend loop-back of the two methods is unstable.

In the solution of the present disclosure, at the frontend of the SLAM, two EKFs are used to filter data of the low-cost MEMS IMU, wheel speed data, and RTK GPS data, to correct strapdown calculation errors of the IMU. Since the strapdown calculation is an autonomous calculation, and the wheel speed data is data of the vehicle itself which is subjected to extremely small impact of an external environment, stable frontend odometer estimation can be implemented. In addition, extraction of a local lane line map at the frontend is performed through lane line detection, affine transformation, calibration and the like, so that stable local map information can be obtained, which is rarely affected.

In addition, in the backend processing, the RTK GPS data is used for loop-back detection, to ensure the loop-back precision and stability. Therefore, this solution has advantages of low costs, high precision, and automated on-line mapping of a high-precision lane line map.

Referring to FIG. 3, this solution is implemented mainly by the following three parts.

(1) Odometer at the frontend of a SLAM

As shown in FIG. 3, an IMU device outputs a triaxial angular velocity $\omega_{ib}^{b}$ measured by a gyroscope and a triaxial acceleration $f_{ib}^{b}$ measured by an accelerometer, and $\omega_{ib}^{b}$ and $f_{ib}^{b}$ enter a strapdown calculation module INS (or referred to as a strapdown inertial navigation calculation module) to calculate a position p, a velocity v, and an attitude a. Whenever the GPS signal is normal, a difference between the position p obtained through strapdown calculation and the position of the GPS and a difference between the velocity v obtained through the strapdown calculation and the velocity $v_{gps}$ of the GPS, as observed quantities, enter a filter EKF1 (a Kalman filter) for filtering. A position error $\delta p$, a velocity error $\delta v$, and an attitude error $\delta a$ (an attitude is an orientation, and may be represented by an acceleration direction, in other words, the attitude error is an error of the acceleration direction) estimated through filtering are fed back to the strapdown calculation module for error correction. In a case that information about a vehicle wheel speed is outputted, a difference between v outputted by the strapdown calculation at the current time instant and wheel speed information $v_{odo}$, as an observed quantity, is inputted to a filter EKF2 (the other Kalman filter) for filtering estimation on the INS calculation error. A position error $\delta p$, a velocity error $\delta v$, and an attitude error $\delta a$ estimated by the EKF2 are fed back to the strapdown calculation module for correcting outputs of the strapdown calculation, to obtain attitude information that is stably outputted after the correction.

In the foregoing solution, an integrated filtering result is used for an odometer. This is because that the GPS signal is not always available. For example, the GPS signal is out of lock in a relatively long time in scenarios such as a toll station, a platform bridge, a tunnel, and an underground garage. In this case, only the strapdown calculation and the vehicle velocity data may be used for the odometer for recursion.

(2) Local lane line mapping at the frontend of the SLAM

In order to implement automated mapping, information about the relative distance between the lane line and the vehicle may be obtained in real time. This process may be implemented by performing the following steps 1 to 3.

In step 1, lane line detection is performed on data such as a target image which is acquired by a monocular camera. The lane line detection may be performed by deep learning or an image processing method.

Taking the lane line being detected by the deep learning as an example, several pictures each including a lane line may be obtained in advance. The lane line is marked in the corresponding picture. A deep learning model is trained by using the marked pictures. The trained model has a capability of recognizing a lane line. That is, the target image acquired by the image acquisition apparatus of the vehicle, such as the monocular camera, is inputted to the module. The model can automatically recognize a lane line in the target image.

In step 2, affine transformation is performed on the image according to a four-point method. On the target image outputted by the monocular camera, four points s1, s2, s3, and s4 of parallel line segments are searched for. Corresponding four points d1, d2, d3, and d4 are set on the affine map. An affine matrix is obtained according to an affine transformation formula as follows:

$$\begin{bmatrix} u_d \\ v_d \\ 1 \end{bmatrix} = \begin{bmatrix} m_{00} & m_{01} & m_{02} \\ m_{10} & m_{11} & m_{12} \\ m_{20} & m_{21} & m_{22} \end{bmatrix} \begin{bmatrix} u_s \\ v_s \\ 1 \end{bmatrix}$$

where $\begin{bmatrix} m_{00} & m_{01} & m_{02} \\ m_{10} & m_{11} & m_{12} \\ m_{20} & m_{21} & m_{22} \end{bmatrix}$ is recorded as a transformation matrix M. The affine transformation matrix M may be obtained by substituting s1,..., and s4, and d1, ..., and d4 whose coordinates are all known in advance into the affine transformation formula. Then, for two-dimensional coordinates of any point, $u_s$ and $v_s$, i.e., coordinates $u_d$ and $v_d$ in the affine graph, are substituted respectively.

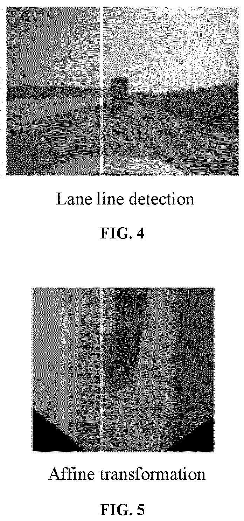

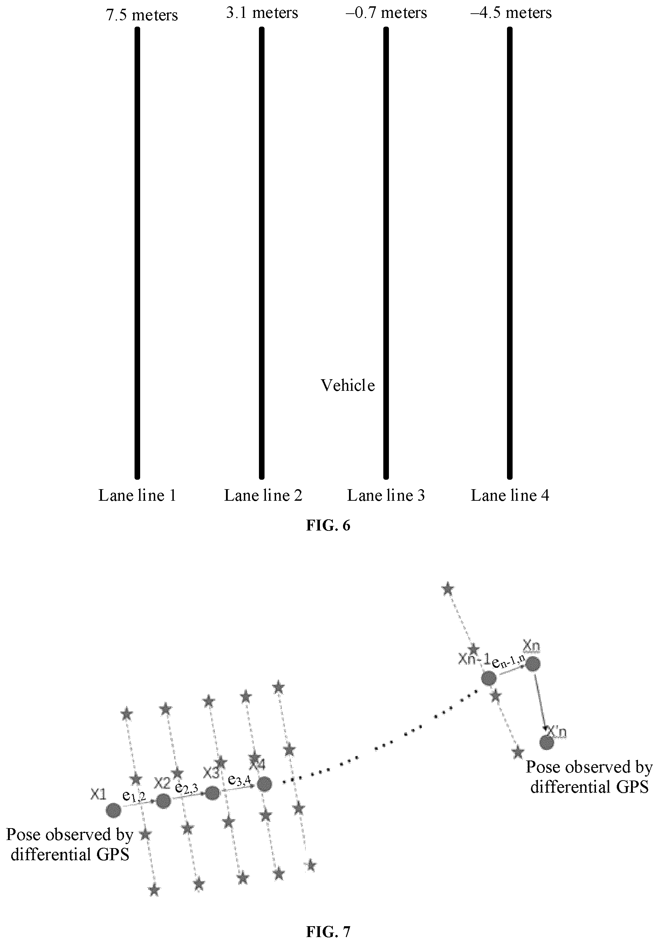

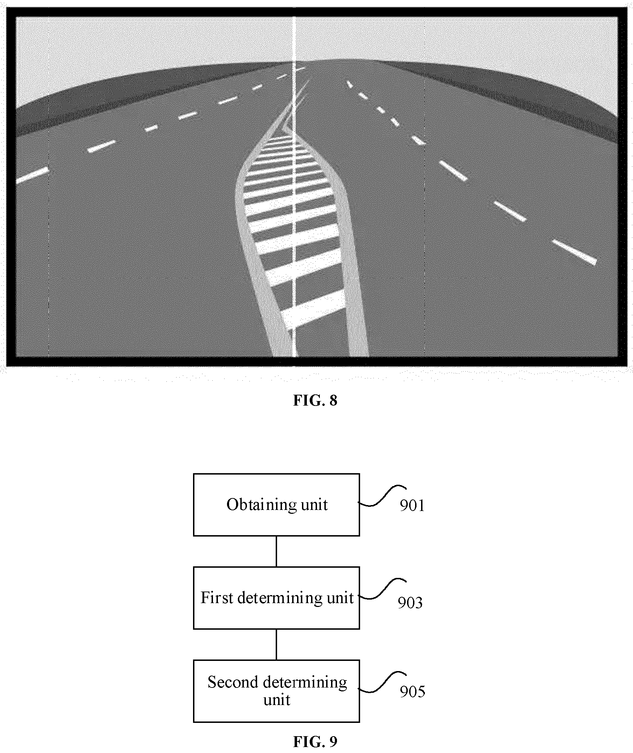

By performing transformation on pixels of the target image shown in FIG. 4 by using the affine matrix M, an affine transformation graph shown in FIG. 5 may be obtained, and further lane lines shown in FIG. 6 and FIG. 8 may be determined. FIG. 6 shows a relative distance (for example, 3.1m) between the vehicle and the lane line.

The strapdown inertial navigation technology is a navigation technology in which, inertial measurement elements (gyroscopes and accelerometers) are mounted directly on a body needing navigation information such as an attitude, a velocity, and a heading of an aircraft, a naval vessel, a vehicle or the like, and a measured signal is converted into a navigation parameter by using a computer. The strapdown inertial navigation calculation module does not rely on external information during operation, and does not radiate energy to the outside, so that the strapdown inertial navigation calculation module is not easily damaged by interference, and is an autonomous navigation system. The strapdown inertial navigation calculation module performs, by using a computer, coordinate transformation on an aircraft acceleration signal measured by an accelerometer, and then performs navigation calculation to obtain required navigation parameters (a heading, a ground velocity, a traveling distance, a geographic location, and the like).

In step 3, according to a scale factor of the affine transformation, conversion is performed on the relative distance between the lane line and the vehicle, to obtain a local lane line map at a time instant corresponding to the target image. As shown in FIG. 6, the relative distance between the vehicle and the lane line may be determined.

(3) Trajectory optimization and map generation at the backend of the SLAM

In the case of the GPS signal being out of lock, precision of the frontend trajectory of the odometer at the frontend is reduced, while high-precision relative pose odometer information can be obtained by filtering INS calculation and vehicle velocity data by using the EKF2. In this case, for automated mapping, a real-time kinematic (RTK) GPS signal is detected at a certain distance interval. When the GPS signal is stable, post graph optimization is performed on the frontend odometer information in the time period. In this process, the landmark of the lane line in the local map is kept unchanged relative to the trajectory pose, and only the traveling trajectory is optimized.

As shown in FIG. 7, a five-pointed star in the figure represents the landmark of the lane line in the local map, and a dotted line segment represents an observation edge of the landmark of the lane line. In the local lane line map obtained based on the foregoing steps, only a lane line distance at a lateral axis position of the vehicle is measured to obtain the landmark of the lane line, and measurement precision is high enough. In this case, the relative distance between the landmark and the vehicle pose is not optimized in the backend optimization, and only the vehicle trajectory is optimized.

A vertex in the pose graph is used as a pose Xi (where i = 1, 2, ..., n) at each calculation time instant, and an error between adjacent poses is used as an edge in the pose graph. The error exists in each relative motion. The pose graph optimizes a cumulative sum of errors between all vertices.

$$F(X) = e_{1,2}^T \Omega_{1,2} e_{1,2} + e_{2,3}^T \Omega_{2,3} e_{2,3} + + e_{3,4}^T \Omega_{3,4} e_{3,4} + \cdots + e_{n-1,n}^T \Omega_{n-1,n} e_{n-1,n}$$

In the formula, $e_{i,j}$ represents an error of an edge between vertices i and j, $\Omega_{i,j}$ represents a covariance matrix of the error of the edge between the vertices i and j, and $e_{i,j}^T$ represents a transpose of $e_{i,j}$.

In order to optimize the error using g2o, edges of the g2o need to be set for measurement. The measured value is obtained from the filtering calculation result of the two EKF filters.

In addition, a differential GPS pose of a starting point of an optimization interval needs to be used as a vertex X1, and a differential GPS pose of an end point of the optimization interval needs to be used as a vertex Xn'. The vertices X1 and Xn' are fixed and are not optimized. After the number of times of optimization is set, the optimization is performed by using the g2o, to obtain a finally optimized vehicle traveling trajectory in the optimization interval.

According to a time corresponding to the landmark of the local map and the optimized vehicle trajectory, a corresponding vehicle pose is re-obtained, Further, an actual map point of the landmark is obtained according to the relative distance between the landmark of the local map and the vehicle pose. Map points of the same lane line are connected together to obtain a final lane line map.

With the technical solution of the present disclosure, a high-precision map of an autonomous traveling lane line can be generated in real time, improving production efficiency of the high-refinement map, and thus reducing the production cost of the high-refinement lane line map by more than 90%.

It should be noted that, for ease of description, the foregoing method embodiments are stated as a series of action combinations. However, a person skilled in the art should understand that the present disclosure is not limited to the described sequence of the actions because some steps may be performed in another sequence or simultaneously according to the present disclosure. In addition, it should be understood by a person skilled in the art that the embodiments described in this specification are all preferred embodiments, and the actions and modules involved in the embodiments are not necessary for the present disclosure.

According to the foregoing descriptions of implementations, a person skilled in the art may clearly learn that the method according to the foregoing embodiments may be implemented by using software and a necessary general hardware platform, or may be implemented by using hardware. However, in most cases, the former is a better implementation. Based on such an understanding, the technical solutions of the present disclosure essentially, or the part contributing to the related art may be embodied in the form of a software product. The computer software product is stored in a storage medium (for example, a ROM/RAM, a magnetic disk, or an optical disc), and includes several instructions for causing a terminal device (which may be a mobile phone, a computer, a server, or a network device) to perform the method according to the embodiments of the present disclosure.

According to another aspect of the embodiments of the present disclosure, a lane line positioning apparatus for implementing the foregoing lane line positioning method is further provided. FIG. 9 is a schematic diagram of a lane line positioning apparatus according to an optional embodiment of the present disclosure. As shown in FIG. 9, the apparatus may include: an obtaining module 901, a first determining unit 903 and a second determining unit 905.

The obtaining module 901 is configured to obtain inertial information, target traveling information and a first position of a vehicle. The inertial information is information measured by an inertial measurement unit of the vehicle. The target traveling information is traveling information of the vehicle acquired at a first time instant. The first position is a position of the vehicle at the first time instant.

The foregoing inertial information is the information measured by the inertial measurement unit IMU of the vehicle, for example, information measured by an IMU including a three-uniaxial accelerometer and a three-uniaxial gyroscope. The information may include acceleration information of an object in independent three axes of a vehicle coordinate system detected by the accelerometers, and angular velocity information of the vehicle relative to a navigation coordinate system measured by the gyroscopes.

The foregoing target traveling information is information generated or measured in vehicle traveling, for example, one or more of mileage information, velocity information, acceleration information, and positioning information. In a case that the vehicle is in a closed or semi-closed scenario, for example, in a bridge hole, a cave, or a parking place, the traveling information does not include the positioning information such as GPS information.

The first determining unit 903 is configured to: determine a second position according to the target traveling information and the first position, and determine a third position of the vehicle at a second time instant based on the inertial information of the vehicle and the second position. The second time instant is later than the first time instant.

The second determining unit 905 is configured to determine a position of a lane line in a map according to the third position and relative position information. The relative position information is used for indicating a relative position relationship between a detected lane line and the vehicle.

The obtaining unit 901 in this embodiment may be configured to perform step S202 in the embodiments of the present disclosure, the first determining unit 903 in this embodiment may be configured to perform step S204 in the embodiments of the present disclosure, and the second determining unit 905 in this embodiment may be configured to perform step S206 in the embodiments of the present disclosure.

It should be noted that, examples implemented by the foregoing modules and application scenarios thereof are the same as those of the corresponding steps, but are not limited to the content disclosed in the foregoing embodiments. It should be noted that, the foregoing modules as a part of the apparatus may run in the hardware environment shown in FIG. 1, and may be implemented by software, or may be implemented by hardware.

By using the foregoing modules, the inertial information, the target traveling information and the first position of the vehicle are obtained. The inertial information is the information measured by the inertial measurement unit of the vehicle, the target traveling information is the traveling information of the vehicle acquired at the first time instant, and the first position is the position of the vehicle at the first time instant. The second position is determined according to the target traveling information and the first position, and the third position of the vehicle at a second time instant is determined based on the inertial information of the vehicle and the second position. The second time instant is later than the first time instant. The position of the lane line in the map is determined according to the third position and the relative position information. The relative position information is used for indicating the relative position relationship between the lane line detected by the vehicle and the vehicle. Since the inertial information does not rely on a GPS signal, even in a case that there is no GPS signal, the third position of the vehicle at a later time instant (that is, the second time instant) can be determined by using the second position and the inertial information of the vehicle, and then the position of the lane line in the map is determined according to the third position and the relative position relationship between the lane line and the vehicle, resolving the technical problem in the related art that the position of the lane line in the map cannot be accurately determined, and further achieving a technical effect of accurately positioning the lane line.

In an optional embodiment, the first determining unit is configured to: correct the first position by using the target traveling information, to obtain the second position, and determine the third position of the vehicle at the second time instant based on the inertial information of the vehicle and the second position.

In an optional embodiment, the first obtaining module includes an obtaining module and a determining module. The obtaining module is configured to obtain a first information change value between first traveling information and the target traveling information. The first traveling information is determined according to inertial information of the vehicle at the first time instant. The first information change value is a traveling information change value of the vehicle at the first time instant. The determining module is configured to: correct the first position according to the first information change value, to obtain the second position, and determine the third position by using the second position and inertial information of the vehicle at the second time instant.

In a case that the inertial information of the vehicle at the second time instant includes a multiaxial angular velocity of the vehicle at the second time instant and a multiaxial acceleration of the vehicle at the second time instant, and the first information change value includes a velocity change value at the first time instant and a position change value at the first time instant, the determining module may include: an input submodule and a first obtaining submodule. The input submodule is configured to input the multiaxial angular velocity of the vehicle at the second time instant, the multiaxial acceleration of the vehicle at the second time instant, and the first information change value to a strapdown inertial navigation calculation module, to cause the strapdown inertial navigation calculation module to: correct the first position by using the position change value at the first time instant, to obtain the second position, correct a velocity at the first time instant by using the velocity change value at the first time instant, determine an acceleration of the vehicle at the second time instant by using the multiaxial angular velocity at the second time instant and the multiaxial acceleration at the second time instant, and determine the third position by using the acceleration of the vehicle at the second time instant, the second position, and the corrected velocity at the first time instant. The first obtaining submodule is configured to obtain the third position of the vehicle at the second time instant outputted by the strapdown inertial navigation calculation module.

The obtaining module may include: a second obtaining submodule and a third obtaining submodule. The second obtaining submodule is configured to: obtain the first traveling information outputted by a strapdown inertial navigation calculation module according to inertial information of the vehicle at the first time instant and a second information change value, and obtain the target traveling information. The first traveling information includes a first velocity, an acceleration, and a position of the vehicle at the first time instant outputted by the strapdown inertial navigation calculation module. The second information change value is a traveling information change value of the vehicle at a third time instant. The third time instant is earlier than the first time instant. The third obtaining submodule is configured to: in a case that the vehicle is not communicably connected to a positioning system, obtain a velocity change value between the first velocity in the first traveling information and a second velocity in the target traveling information at the first time instant, and a position change value between a position in the first traveling information and the first position at the first time instant. The first information change value includes the velocity change value at the first time instant and the position change value at the first time instant.

Optionally, the second obtaining submodule is further configured to: obtain a second velocity of the vehicle at the first time instant and a position of the vehicle at the first time instant that are determined by an odometer of the vehicle.

Optionally, the second obtaining submodule is further configured to: before obtaining the first traveling information outputted by the strapdown inertial navigation calculation module according to the inertial information of the vehicle at the first time instant and the second information change value, obtain the second information change value. The second information change value includes a velocity change value of the vehicle at the third time instant determined by using a first filter and a position change value and an acceleration change value of the vehicle at the third time instant that are determined by using a second filter.

In another optional embodiment, the second determining unit includes: a recognition module, a relationship obtaining module and a search module. The recognition module is configured to recognize a lane line from a target image acquired by an image acquisition apparatus of the vehicle. The relationship obtaining module is configured to obtain relative position information between the lane line and the vehicle. The search module is configured to search for a fourth position to which the third position is mapped in the map, determine a fifth position in the map according to the fourth position and the relative position information, and create the lane line at the fifth position.

Optionally, for recognizing the lane line from the target image acquired by the image acquisition apparatus of the vehicle, the recognition module is configured to perform affine transformation on the target image by using an affine transformation matrix, to obtain an affine transformation graph of the target image, and determine parallel lines in the affine transformation graph as lane lines.

Optionally, in a case that the relative position information includes a relative distance between the lane line and the vehicle, for obtaining the relative position relationship between the lane line and the vehicle, the relationship obtaining module is configured to obtain a pixel distance between the lane line and the vehicle in the affine transformation graph, and determine the relative distance between the lane line and the vehicle by using a product of a scale factor of the affine transformation and the pixel distance.

In the solution of the present disclosure, at the frontend of the SLAM, two EKFs are used to filter data of the low-cost MEMS IMU, wheel speed data, and RTK GPS data, to correct strapdown calculation errors of the IMU. Since the strapdown calculation is an autonomous calculation, and the wheel speed data is data of the vehicle itself, which is subjected to extremely small impact of an external environment, stable frontend odometer estimation can be implemented. In addition, extraction of a local lane line map at the frontend is performed through lane line detection, affine transformation, calibration, and the like, so that stable local map information can be obtained, which is rarely affected.

In addition, in the backend processing, the RTK GPS data is used for loop-back detection, to ensure the loop-back precision and stability. Therefore, this solution has advantages of low costs, high precision, and automated on-line mapping of a high-precision lane line map.

It should be noted that, examples implemented by the foregoing modules and application scenarios thereof are the same as those of the corresponding steps, but are not limited to the content disclosed in the foregoing embodiments. It should be noted that, the foregoing modules as a part of the apparatus may run in the hardware environment shown in FIG. 1, and may be implemented by software, or may be implemented by hardware. The hardware environment includes a network environment.

According to another aspect of the embodiments of the present disclosure, a server or a terminal for implementing the foregoing lane line positioning method is further provided.

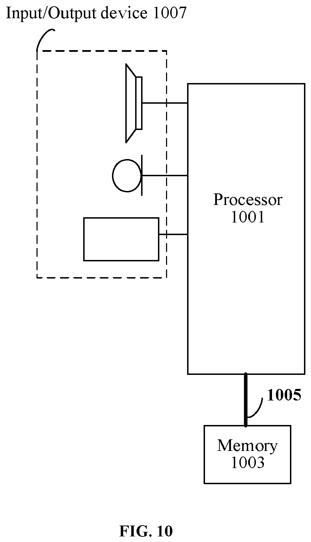

FIG. 10 is a structural block diagram of a terminal according to an embodiment of the present disclosure. As shown in FIG. 10, the terminal may include one or more processors 1001 (only one processor is shown in the figure), a memory 1003, and a transmission apparatus 1005. As shown in FIG. 10, the terminal may further include an input/output device 1007.

The memory 1003 may be configured to store a software program and a module, for example, a program instruction/module corresponding to the lane line positioning method and apparatus in the embodiments of the present disclosure. The processor 1001 performs various functional applications and data processing, i.e., implements the foregoing lane line positioning method, by executing the software program and the module stored in the memory 1003. The memory 1003 may include a high-speed random memory, and may further include a non-volatile memory, for example, one or more magnetic storage apparatuses, a flash memory, or another nonvolatile solid-state memory. In some examples, the memory 1003 may further include memories remotely disposed relative to the processor 1001, and the remote memories can be connected to the terminal through a network. Examples of the foregoing network include, but are not limited to, the Internet, an intranet, a local area network, a mobile communications network, and a combination thereof.

The transmission apparatus 1005 is configured to receive or transmit data via a network, or may further be used for data transmission between the processor and the memory. A specific example of the foregoing network may include a wired network and a wireless network. In an example, the transmission apparatus 1005 includes a network interface controller (NIC) that may be connected to another network device and a router by using a network cable, to communicate with the Internet or the local network. In an example, the transmission apparatus 1005 is a radio frequency (RF) module, which is in communication with the Internet in a wireless manner.

Specifically, the memory 1003 is configured to store an application program.

The processor 1001 may invoke the application program stored in the memory 1003 by using the transmission apparatus 1005, to perform the following steps of:

obtaining inertial information, target traveling information and a first position of a vehicle, the inertial information being information measured by an inertial measurement unit of the vehicle, the target traveling information being traveling information of the vehicle acquired at a first time instant, and the first position being a position of the vehicle at the first time instant;

determining a second position according to the target traveling information and the first position, and determining a third position of the vehicle at a second time instant based on the inertial information of the vehicle and the second position, the second time instant being later than the first time instant; and

determining a position of a lane line in a map according to the third position and relative position information, the relative position information being used for indicating a relative position relationship between a detected lane line and the vehicle.

Optionally, for a specific example in this embodiment, reference may be made to the examples described in the foregoing embodiment. Details thereof are not described herein again in this embodiment.

A person of ordinary skill in the art may understand that the structure shown in FIG. 10 is merely an example. The terminal may be a terminal device such as a smartphone (for example, an Android mobile phone or an iOS mobile phone), a tablet computer, a palmtop computer, a mobile Internet device (MID), or a PAD. FIG. 10 does not constitute a limitation on a structure of the foregoing electronic device. For example, the terminal may include more or fewer components (such as a network interface and a display apparatus) than those shown in FIG. 10, or may have a configuration different from that shown in FIG. 10.

A person of ordinary skill in the art may understand that all or some of the steps of the methods in the foregoing embodiments may be implemented by a program instructing relevant hardware of the terminal device. The program may be stored in a computer-readable storage medium. The storage medium may include a flash disk, a Read-Only Memory (ROM), a Random Access Memory (RAM), a magnetic disk, an optical disc, and the like.

A storage medium is further provided according to an embodiment of the present disclosure. Optionally, in this embodiment, the storage medium is configured to store a program code for performing the lane line positioning method.

Optionally, in this embodiment, the storage medium is located on at least one of multiple network devices in the network described in the foregoing embodiment.

Optionally, for a specific example in this embodiment, reference may be made to the examples described in the foregoing embodiment. Details thereof are not described herein again in this embodiment.

Optionally, in this embodiment, the storage medium includes, but is not limited to, various media such as a USB flash drive, a Read-Only Memory (ROM), a Random Access Memory (RAM), a mobile hard disk, a magnetic disk, and an optical disc that can store the program code.

The sequence numbers of the foregoing embodiments of the present disclosure are merely for description purpose and do not indicate the preference of the embodiments.

If the integrated unit in the foregoing embodiments is implemented in the form of a software functional unit and is sold or used as an independent product, the integrated unit may be stored in the foregoing computer-readable storage medium. Based on such an understanding, the technical solutions of the present disclosure essentially, or the part contributing to the related art, or all or a part of the technical solutions may be implemented in a form of a software product. The computer software product is stored in a storage medium and includes several instructions for causing one or more computer devices (which may be a personal computer, a server, a network device, or the like) to perform all or some of steps of the methods in the embodiments of the present disclosure.

In the foregoing embodiments of the present disclosure, descriptions of the embodiments have different emphases. As for parts that are not described in detail in one embodiment, reference can be made to the relevant descriptions of the other embodiments.

In the several embodiments provided in the present disclosure, it is to be understood that the disclosed client can be implemented in other manners. The apparatus embodiments described above are merely exemplary. For example, the division of the units is merely the division of logic functions, and other division manners may be used during actual implementation. For example, multiple units or components may be combined, or may be integrated into another system, or some features may be omitted or not performed. In addition, the coupling, or direct coupling, or communication connection that is presented or discussed may be the indirect coupling or communication connection through some interfaces, units, or modules, and may be in electrical or other forms.

The units described as separate parts may be or may not be physically separate. Parts displayed as units may be or may not be physical units, and may be located in one position, or may be distributed on multiple network units. Some or all of the units may be selected according to actual requirements to achieve the objectives of the solutions in the embodiments.

In addition, functional units in the embodiments of the present disclosure may be integrated into one processing unit, or each of the units can exist alone physically, or two or more units are integrated into one unit. The foregoing integrated unit may be implemented in the form of hardware, or may be implemented in the form of a software function unit.

The foregoing merely shows exemplary implementations of the present disclosure. It should be noted that, a person of ordinary skill in the art can further make several improvements and refinements without departing from the principle of the appended claims.

**Claims**

1.  A computer-implemented lane line positioning method, comprising:

    obtaining (S202) inertial information, target traveling information and a first position of a vehicle, the inertial information being information measured by an inertial measurement unit of the vehicle, the target traveling information being traveling information of the vehicle acquired at a first time instant, and the first position being a position of the vehicle at the first time instant;

determining (S204) a second position according to the target traveling information and the first position, and determining a third position of the vehicle at a second time instant based on the inertial information of the vehicle and the second position, the second time instant being later than the first time instant; and

determining (S206) a position of a lane line in a map according to the third position and relative position information, the relative position information being used for indicating a relative position relationship between a detected lane line and the vehicle;

wherein the determining a position of a lane line in a map according to the third position and relative position information comprises:

when a global positioning system, GPS, signal of the vehicle for providing the target traveling information is obtained, optimizing a travelling trajectory corresponding to consecutive second positions of the vehicle and subsequently correcting the position of the lane line by keeping a distance between the lane line and the optimized travelling trajectory unchanged.

2. The method according to claim 1, wherein the determining a second position according to the target traveling information and the first position, and determining a third position of the vehicle at a second time instant based on the inertial information of the vehicle and the second position comprises:

correcting the first position by using the target traveling information, to obtain the second position, and determining the third position of the vehicle at the second time instant based on the inertial information of the vehicle and the second position.

3. The method according to claim 2, wherein the correcting the first position by using the target traveling information, to obtain the second position, and determining the third position of the vehicle at the second time instant based on the inertial information of the vehicle and the second position comprises:

obtaining a first information change value between first traveling information and the target traveling information, the first traveling information being determined according to inertial information of the vehicle at the first time instant, and the first information change value being a traveling information change value of the vehicle at the first time instant; and

correcting the first position according to the first information change value, to obtain the second position, and determining the third position by using the second position and inertial information of the vehicle at the second time instant.

4. The method according to claim 3, wherein in a case that the inertial information of the vehicle at the second time instant comprises a multiaxial angular velocity of the vehicle at the second time instant and a multiaxial acceleration of the vehicle at the second time instant, and the first information change value comprises a velocity change value at the first time instant and a position change value at the first time instant, the correcting the first position according to the first information change value, to obtain the second position, and determining the third position by using the second position and inertial information of the vehicle at the second time instant comprises:

inputting the multiaxial angular velocity of the vehicle at the second time instant, the multiaxial acceleration of the vehicle at the second time instant, and the first information change value to a strapdown inertial navigation calculation module, to cause the strapdown inertial navigation calculation module to correct the first position by using the position change value at the first time instant, to obtain the second position, correct a velocity at the first time instant by using the velocity change value at the first time instant, determine an acceleration of the vehicle at the second time instant by using the multiaxial angular velocity at the second time instant and the multiaxial acceleration at the second time instant, and determine the third position by using the acceleration of the vehicle at the second time instant, the second position, and the corrected velocity at the first time instant; and

obtaining the third position of the vehicle at the second time instant outputted by the strapdown inertial navigation calculation module.

5. The method according to claim 3, wherein the obtaining a first information change value between first traveling information and the target traveling information comprises:

obtaining the first traveling information outputted by a strapdown inertial navigation calculation module according to inertial information of the vehicle at the first time instant and a second information change value, and obtaining the target traveling information, the first traveling information comprising a first velocity, an acceleration, and the first position of the vehicle at the first time instant outputted by the strapdown inertial navigation calculation module, and the second information change value being a traveling information change value of the vehicle at a third time instant, the third time instant being earlier than the first time instant; and

obtaining a velocity change value between the first velocity in the first traveling information and a second velocity in the target traveling information at the first moment, and a position change value between a position in the first traveling information and the first position at the first moment in a case that the vehicle is not communicably connected to a positioning system, the first information change value comprising the velocity change value at the first time instant and the position change value at the first time instant.

6. The method according to claim 5, wherein the obtaining the target traveling information comprises:
obtaining a second velocity of the vehicle at the first time instant and a position of the vehicle at the first time instant that are determined by an odometer of the vehicle.

7. The method according to claim 5, wherein before the obtaining the first traveling information outputted by a strapdown inertial navigation calculation module according to inertial information of the vehicle at the first time instant and a second information change value, the method further comprises:

obtaining the second information change value, the second information change value comprising a velocity change value of the vehicle at a third time instant determined by using a first filter and a position change value and an acceleration change value of the vehicle at the third time instant that are determined by using a second filter.

8. The method according to any one of claims 1 to 7, wherein the determining a position of a lane line in a map according to the third position and relative position information comprises:

recognizing a lane line from a target image acquired by an image acquisition apparatus of the vehicle;
obtaining relative position information between the lane line and the vehicle;
searching for a fourth position to which the third position is mapped in the map; and
determining a fifth position in the map according to the fourth position and the relative position information, and creating the lane line at the fifth position.

9. The method according to claim 8, wherein the recognizing a lane line from a target image acquired by an image acquisition apparatus of the vehicle comprises:

performing affine transformation on the target image by using an affine transformation matrix, to obtain an affine transformation graph of the target image; and
determining parallel lines in the affine transformation graph as lane lines.

10. The method according to claim 9, wherein in a case that the relative position information comprises a relative distance between the lane line and the vehicle, the obtaining relative position information between the lane line and the vehicle comprises:

obtaining a pixel distance between the lane line and the vehicle in the affine transformation graph; and
determining the relative distance between the lane line and the vehicle by using a product of a scale factor of the affine transformation and the pixel distance.

11. A lane line positioning apparatus, comprising:

an obtaining module (901), configured to obtain inertial information, target traveling information and a first position of a vehicle, the inertial information being information measured by an inertial measurement unit of the vehicle, the target traveling information being traveling information of the vehicle acquired at a first time instant, and the first position being a position of the vehicle at the first time instant;
a first determining unit (903), configured to: determine a second position according to the target traveling information and the first position, and determine a third position of the vehicle at a second time instant based on the inertial information of the vehicle and the second position, the second time instant being later than the first time instant; and
a second determining unit (905), configured to determine a position of a lane line in a map according to the third position and relative position information, the relative position information being used for indicating a relative position relationship between a detected lane line and the vehicle;

wherein the second determining unit (905) is configured to optimize a travelling trajectory corresponding to consecutive second positions of the vehicle and subsequently correcting the position of the lane line by keeping a distance between the lane line and the optimized travel trajectory unchanged when a global positioning system, GPS, signal of the vehicle for providing the target traveling information is obtained.

12. A storage medium storing a program that, when executed by a processor, causes the processor to carry out the method according to any one of claims 1 to 10.

13. An electronic device, comprising:

a memory;
a processor; and
a computer program that is stored on the memory and is executable by the processor, wherein the processor is configured to execute the computer program to perform the method according to any one of claims 1 to 10.

14. A computer program product, comprising an instruction that, when executed on a computer, causes the computer to perform the method according to any one of claims 1 to 10.

**Patentansprüche**

1. Computerimplementiertes Verfahren zur Positionsbestimmung einer Fahrspurlinie, das Folgendes umfasst:

Erhalten (S202) von Trägheitsinformationen, Fahrtzielinformationen und einer ersten Position eines Fahrzeugs, wobei die Trägheitsinformationen Informationen sind, die von einer Trägheitsmesseinheit des Fahrzeugs gemessen werden, wobei die Fahrtzielinformationen Fahrinformationen des Fahrzeugs sind, die in einer ersten Zeitinstanz erfasst werden, und wobei die erste Position eine Position des Fahrzeugs in der ersten Zeitinstanz ist;
Bestimmen (S204) einer zweiten Position gemäß den Fahrtzielinformationen und der ersten Position und Bestimmen einer dritten Position des Fahrzeugs in einer zweiten Zeitinstanz auf Basis der Trägheitsinformationen des Fahrzeugs und der zweiten Position, wobei die zweite Zeitinstanz später ist als die erste Zeitinstanz; und
Bestimmen (S206) einer Position einer Fahrspurlinie auf einer Karte gemäß der dritten Position und relativen Positionsinformationen, wobei die relativen Positionsinformationen zum Anzeigen einer relativen Positionsbeziehung zwischen einer detektierten Fahrspurlinie und dem Fahrzeug verwendet werden;
wobei das Bestimmen einer Position einer Fahrspurlinie auf einer Karte gemäß der dritten Position und relativen Positionsinformationen Folgendes umfasst:
wenn ein globales Positionsbestimmungssystem(GPS)-Signal des Fahrzeugs zum Bereitstellen der Fahrtzielinformationen erhalten wird, Optimieren einer Fahrtrajektorie, die aufeinanderfolgenden zweiten Positionen des Fahrzeugs entspricht, und danach Korrigieren der Position der Fahrspurlinie durch Unverändertlassen eines Abstands zwischen der Fahrspurlinie und der optimierten Fahrtrajektorie.

2. Verfahren nach Anspruch 1, wobei das Bestimmen einer zweiten Position gemäß den Fahrtzielinformationen und der ersten Position und das Bestimmen einer dritten Position des Fahrzeugs in einer zweiten Zeitinstanz auf Basis der Trägheitsinformationen des Fahrzeugs und der zweiten Position Folgendes umfasst:
Korrigieren der ersten Position unter Verwendung der Fahrtzielinformationen, um die zweite Position zu erhalten, und Bestimmen der dritten Position des Fahrzeugs in der zweiten Zeitinstanz auf Basis der Trägheitsinformationen des Fahrzeugs und der zweiten Position.

3. Verfahren nach Anspruch 2, wobei das Korrigieren der ersten Position unter Verwendung der Fahrtzielinformationen, um die zweite Position zu erhalten, und das Bestimmen der dritten Position des Fahrzeugs in der zweiten Zeitinstanz auf Basis der Trägheitsinformationen des Fahrzeugs und der zweiten Position Folgendes umfasst:

Erhalten eines ersten Informationsänderungswertes zwischen ersten Fahrinformationen und den Fahrtzielinformationen, wobei die ersten Fahrinformationen gemäß den Trägheitsinformationen des Fahrzeugs in der ersten Zeitinstanz bestimmt werden und wobei der erste Informationsänderungswert ein Fahrinformationsänderungswert des Fahrzeugs in der ersten Zeitinstanz ist; und
Korrigieren der ersten Position gemäß dem ersten Informationsänderungswert, um die zweite Position zu erhalten, und Bestimmen der dritten Position unter Verwendung der zweiten Position und von Trägheitsinformationen des Fahrzeugs in der zweiten Zeitinstanz.

4. Verfahren nach Anspruch 3, wobei in einem Fall, in dem die Trägheitsinformationen des Fahrzeugs in der zweiten Zeitinstanz eine multiaxiale Winkelgeschwindigkeit des Fahrzeugs in der zweiten Zeitinstanz und eine multiaxiale Beschleunigung des Fahrzeugs in der zweiten Zeitinstanz umfassen und der erste Informationsänderungswert einen Geschwindigkeitsänderungswert in der ersten Zeitinstanz und einen Positionsänderungswert in der ersten Zeitinstanz umfasst, das Korrigieren der ersten Position gemäß dem ersten Informationsänderungswert, um die zweite Position zu erhalten, und das Bestimmen der dritten Position unter Verwendung der zweiten Position und der Trägheitsinformationen des Fahrzeugs in der zweiten Zeitinstanz Folgendes umfasst:

Eingeben der multiaxialen Winkelgeschwindigkeit des Fahrzeugs in der zweiten Zeitinstanz, der multiaxialen Beschleunigung des Fahrzeugs in der zweiten Zeitinstanz und des ersten Informationsänderungswertes in ein Strapdown-Trägheitsnavigationsberechnungsmodul, um das Strapdown-Trägheitsnavigationsberechnungsmodul zu veranlassen, die erste Position unter Verwendung des Positionsänderungswertes in der ersten Zeitinstanz zu korrigieren, die zweite Position zu erhalten, eine Geschwindigkeit in der ersten Zeitinstanz unter Verwendung des Geschwindigkeitsänderungswertes in der ersten Zeitinstanz zu korrigieren, eine Beschleunigung des Fahrzeugs in der zweiten Zeitinstanz unter Verwendung der multiaxialen Winkelgeschwindigkeit in der zweiten Zeitinstanz und der multiaxialen Beschleunigung in der zweiten Zeitinstanz zu bestimmen und die dritte Position unter Verwendung der Beschleunigung des Fahrzeugs in der zweiten Zeitinstanz, der zweiten Position und der korrigierten Geschwindigkeit in der ersten Zeitinstanz zu bestimmen; und
Erhalten der dritten Position des Fahrzeugs in der zweiten Zeitinstanz, die vom Strapdown-Trägheitsnavigationsberechnungsmodul ausgegeben wird.

5. Verfahren nach Anspruch 3, wobei das Erhalten eines ersten Informationsänderungswertes zwischen den ersten Fahrinformationen und den Fahrtzielinformationen Folgendes umfasst:

Erhalten der ersten Fahrinformationen, die von einem Strapdown-Trägheitsnavigationsberechnungsmodul gemäß Trägheitsinformationen des Fahrzeugs in der ersten Zeitinstanz ausgegeben werden, und eines zweiten Informationsänderungswertes und Erhalten der Fahrtzielinformationen, wobei die ersten Fahrinformationen eine erste Geschwindigkeit, eine Beschleunigung und die erste Position des Fahrzeugs in der ersten Zeitinstanz, die vom Strapdown-Trägheitsnavigationsberechnungsmodul ausgegeben wird, umfassen, und wobei der zweite Informationsänderungswert ein Fahrinformationsänderungswert des Fahrzeugs in einer dritten Zeitinstanz ist, wobei die dritte Zeitinstanz früher ist als die erste Zeitinstanz; und
Erhalten eines Geschwindigkeitsänderungswertes zwischen der ersten Geschwindigkeit in den ersten Fahrinformationen und einer zweiten Geschwindigkeit in den Fahrtzielinformationen im ersten Moment und eines Positionsänderungswertes zwischen einer Position in den ersten Fahrinformationen und der ersten Position im ersten Moment in einem Fall, in dem das Fahrzeug nicht mit einem Positionsbestimmungssystem kommunikativ verbunden ist, wobei der erste Informationsänderungswert den Geschwindigkeitsänderungswert in der ersten Zeitinstanz und den Positionsänderungswert in der ersten Zeitinstanz umfasst.

6. Verfahren nach Anspruch 5, wobei das Erhalten der Fahrtzielinformationen Folgendes umfasst:
Erhalten einer zweiten Geschwindigkeit des Fahrzeugs in der ersten Zeitinstanz und einer Position des Fahrzeugs in der ersten Zeitinstanz, die mit einem Kilometerzähler des Fahrzeugs bestimmt werden.

7. Verfahren nach Anspruch 5, wobei das Verfahren vor dem Erhalten der ersten Fahrinformationen, die von einem Strapdown-Trägheitsnavigationsberechnungsmodul gemäß Trägheitsinformationen des Fahrzeugs in der ersten Zeitinstanz ausgegeben werden, und eines zweiten Informationsänderungswertes ferner Folgendes umfasst:
Erhalten des zweiten Informationsänderungswertes, wobei der zweite Informationsänderungswert einen Geschwindigkeitsänderungswert des Fahrzeugs in einer dritten Zeitinstanz, der unter Verwendung eines ersten Filters und eines Positionsänderungswertes bestimmt wird, und einen Beschleunigungsänderungswert des Fahrzeugs in der dritten Zeitinstanz, der unter Verwendung eines zweiten Filters bestimmt wird, umfasst.

8. Verfahren nach einem der Ansprüche 1 bis 7, wobei das Bestimmen einer Position einer Fahrspurlinie auf einer Karte gemäß der dritten Position und den relativen Positionsinformationen Folgendes umfasst:

Erkennen einer Fahrspurlinie in einem Zielbild, das von einer Bilderfassungseinrichtung des Fahrzeugs erfasst wird;
Erhalten von relativen Positionsinformationen zwischen der Fahrspurlinie und dem Fahrzeug;
Suchen nach einer vierten Position, der die dritte Position auf der Karte zugeordnet ist; und
Bestimmen einer fünften Position auf der Karte gemäß der vierten Position und den relativen Positionsinformationen und Erstellen der Fahrspurlinie in der fünften Position.

9. Verfahren nach Anspruch 8, wobei das Erkennen einer Fahrspurlinie in einem Zielbild, das von einer Bilderfassungseinrichtung des Fahrzeugs erfasst wird, Folgendes umfasst:

Durchführen einer affinen Transformation auf dem Zielbild unter Verwendung einer affinen Transformationsmatrix, um einen affinen Transformationsgraphen des Zielbildes zu erhalten; und
Bestimmen von parallelen Linien im affinen Transformationsgraphen als Fahrspurlinien.

10. Verfahren nach Anspruch 9, wobei in einem Fall, in dem die relativen Positionsinformationen einen relativen Abstand zwischen der Fahrspurlinie und dem Fahrzeug umfassen, das Erhalten von relativen Positionsinformationen zwischen der Fahrspurlinie und dem Fahrzeug Folgendes umfasst:

Erhalten eines Pixelabstands zwischen der Fahrspurlinie und dem Fahrzeug im affinen Transformationsgraphen; und
Bestimmen des relativen Abstands zwischen der Fahrspurlinie und dem Fahrzeug unter Verwendung eines Produkts eines Skalierungsfaktors der affinen Transformation und des Pixelabstands.

11. Fahrspurlinienpositionsbestimmungseinrichtung, die Folgendes umfasst:

ein Erhaltungsmodul (901), das dazu ausgelegt ist, Trägheitsinformationen, Fahrtzielinformationen und eine erste Position eines Fahrzeugs zu erhalten, wobei die Trägheitsinformationen Informationen sind, die von einer Trägheitsmesseinheit des Fahrzeugs gemessen werden, wobei die Fahrtzielinformationen Fahrinformationen des Fahrzeugs sind, die in einer ersten Zeitinstanz erfasst werden, und wobei die erste Position eine Position des Fahrzeugs in der ersten Zeitinstanz ist;
eine erste Bestimmungseinheit (903), die zu Folgendem ausgelegt ist: Bestimmen einer zweiten Position gemäß den Fahrtzielinformationen und der ersten Position und Bestimmen einer dritten Position des Fahrzeugs in einer zweiten Zeitinstanz auf Basis der Trägheitsinformationen des Fahrzeugs und der zweiten Position, wobei die zweite Zeitinstanz später ist als die erste Zeitinstanz; und
eine zweite Bestimmungseinheit (905), die dazu ausgelegt ist, eine Position einer Fahrspurlinie auf einer Karte gemäß der dritten Position und relativen Positionsinformationen zu bestimmen, wobei die relativen Positionsinformationen zum Anzeigen einer relativen Positionsbeziehung zwischen einer detektierten Fahrspurlinie und dem Fahrzeug verwendet werden;
wobei die zweite Bestimmungseinheit (905) dazu ausgelegt ist, eine Fahrtrajektorie, die aufeinanderfolgenden zweiten Positionen des Fahrzeugs entspricht, zu optimieren und danach die Position der Fahrspurlinie durch Unverändertlassen eines Abstands zwischen der Fahrspurlinie und der optimierten Fahrtrajektorie zu korrigieren, wenn ein globales Positionsbestimmungssystem(GPS)-Signal des Fahrzeugs zum Bereitstellen der Fahrtzielinformationen erhalten wird.

12. Speichermedium, auf dem ein Programm gespeichert ist, das, wenn es von einem Prozessor ausgeführt wird, den Prozessor veranlasst, das Verfahren nach einem der Ansprüche 1 bis 10 umzusetzen.

13. Elektronische Vorrichtung, die Folgendes umfasst:

einen Speicher;
einen Prozessor; und
ein Computerprogramm, das im Speicher gespeichert und vom Prozessor ausführbar ist, wobei der Prozessor dazu ausgelegt ist, das Computerprogramm auszuführen, um das Verfahren nach einem der Ansprüche 1 bis 10 durchzuführen.

14. Computerprogrammprodukt, das eine Anweisung umfasst, die, wenn sie auf einem Computer ausgeführt wird, den Computer veranlasst, das Verfahren nach einem der Ansprüche 1 bis 10 durchzuführen.

**Revendications**

1. Procédé de positionnement de ligne de voie mis en œuvre par ordinateur, comprenant :

l'obtention (S202) d'informations d'inertie, d'informations de déplacement cible et d'une première position d'un véhicule, les informations d'inertie étant des informations mesurées par une unité de mesure d'inertie du véhicule, les informations de déplacement cible étant des informations de déplacement du véhicule acquises à un premier instant, et la première position étant une position du véhicule au premier instant ;

la détermination (S204) d'une deuxième position selon les informations de déplacement cible et la première position, et la détermination d'une troisième position du véhicule à un deuxième instant sur la base des informations d'inertie du véhicule et de la deuxième position, le deuxième instant étant postérieur au premier instant ; et

la détermination (S206) d'une position d'une ligne de voie dans une carte selon la troisième position et des informations de position relative, les informations de position relative étant utilisées pour indiquer une relation de position relative entre une ligne de voie détectée et le véhicule ;

dans lequel la détermination d'une position d'une ligne de voie dans une carte selon la troisième position et des informations de position relative comprend :

lorsqu'un signal de système mondial de localisation, GPS, du véhicule pour fournir les informations de déplacement cible est obtenu, l'optimisation d'une trajectoire de déplacement correspondant à des deuxièmes positions consécutives du véhicule et la correction ensuite de la position de la ligne de voie en maintenant une distance entre la ligne de voie et la trajectoire de déplacement optimisée inchangée.

2. Procédé selon la revendication 1, dans lequel la détermination d'une deuxième position selon les informations de déplacement cible et la première position, et la détermination d'une troisième position du véhicule à un deuxième instant sur la base des informations d'inertie du véhicule et de la deuxième position comprennent :

la correction de la première position en utilisant les informations de déplacement cible afin d'obtenir la deuxième position, et la détermination de la troisième position du véhicule au deuxième instant sur la base des informations d'inertie du véhicule et de la deuxième position.

3. Procédé selon la revendication 2, dans lequel la correction de la première position en utilisant les informations de déplacement cible afin d'obtenir la deuxième position, et la détermination de la troisième position du véhicule au deuxième instant sur la base des informations d'inertie du véhicule et de la deuxième position comprennent :

l'obtention d'une première valeur de changement d'informations entre des premières informations de déplacement et les informations de déplacement cible, les premières informations de déplacement étant déterminées selon les informations d'inertie du véhicule au premier instant, et la première valeur de changement d'informations étant une valeur d'informations de déplacement de changement du véhicule au premier instant ; et

la correction de la première position selon la première valeur de changement d'informations afin d'obtenir la deuxième position, et la détermination de la troisième position en utilisant la deuxième position et les informations d'inertie du véhicule au deuxième instant.

4. Procédé selon la revendication 3, dans lequel, dans le cas où les informations d'inertie du véhicule au deuxième instant comprennent une vitesse angulaire multiaxiale du véhicule au deuxième instant et une accélération multiaxiale du véhicule au deuxième instant, et où la première valeur de changement d'informations comprend une valeur de changement de vitesse au premier instant et une valeur de changement de position au premier instant, la correction de la première position selon la première valeur de changement d'informations afin d'obtenir la deuxième position et la détermination de la troisième position en utilisant la deuxième position et les informations d'inertie du véhicule au deuxième instant comprennent :

l'entrée de la vitesse angulaire multiaxiale du véhicule au deuxième instant, de l'accélération multiaxiale du véhicule au deuxième instant et de la première valeur de changement d'informations dans un module de calcul de navigation d'inertie à composants liés, pour amener le module de calcul de navigation d'inertie à composants liés à corriger la première position en utilisant la valeur de changement de position au premier instant afin d'obtenir la deuxième position, à corriger une vitesse au premier instant en utilisant la valeur de changement de vitesse au premier instant, à déterminer une accélération du véhicule au deuxième instant en utilisant la vitesse angulaire multiaxiale au deuxième instant et l'accélération multiaxiale au deuxième instant, et à déterminer la troisième position en utilisant l'accélération du véhicule au deuxième instant, la deuxième position et la vitesse corrigée au premier instant ; et

l'obtention de la troisième position du véhicule au deuxième instant délivrée par le module de calcul de navigation d'inertie à composants liés.

5. Procédé selon la revendication 3, dans lequel l'obtention d'une première valeur de changement d'informations entre des premières informations de déplacement et les informations de déplacement cible comprend :

l'obtention des premières informations de déplacement délivrées par un module de calcul de navigation d'inertie à composants liés selon les informations d'inertie du véhicule au premier instant et une deuxième valeur de changement d'informations, et l'obtention des informations de déplacement cible, les premières informations de déplacement comprenant une première vitesse, une accélération et la première position du véhicule au premier instant délivrée par le module de calcul de navigation d'inertie à composants liés, et la deuxième valeur de changement d'informations étant une valeur d'informations de déplacement de changement du véhicule à un troisième instant, le troisième instant étant antérieur au premier instant ; et

l'obtention d'une valeur de changement de vitesse entre la première vitesse dans les premières informations de déplacement et une deuxième vitesse dans les informations de déplacement cible au premier moment, et d'une valeur de changement de position entre une position dans les premières informations de déplacement et la première position au premier moment dans le cas où le véhicule n'est pas connecté en communication à un système de positionnement, la première valeur de changement d'informations comprenant la valeur de changement de vitesse au premier instant et la valeur de changement de position au premier instant.

6. Procédé selon la revendication 5, dans lequel l'obtention des informations de déplacement cible comprend :
l'obtention d'une deuxième vitesse du véhicule au premier instant et d'une position du véhicule au premier instant qui sont déterminées par un odomètre du véhicule.

7. Procédé selon la revendication 5, dans lequel, avant d'obtenir les premières informations de déplacement délivrées par un module de calcul de navigation d'inertie à composants liés selon les informations d'inertie du véhicule au premier instant et une deuxième valeur de changement d'informations, le procédé comprend en outre :
l'obtention de la deuxième valeur de changement d'informations, la deuxième valeur de changement d'informations comprenant une valeur de changement de vitesse du véhicule à un troisième instant déterminé en utilisant un premier filtre, et une valeur de changement de position et une valeur de changement d'accélération du véhicule au troisième instant qui sont déterminées en utilisant un deuxième filtre.

8. Procédé selon l'une des revendications 1 à 7, dans lequel la détermination d'une position d'une ligne de voie dans une carte selon la troisième position et des informations de position relative comprend :

la reconnaissance d'une ligne de voie à partir d'une image cible acquise par un appareil d'acquisition d'images du véhicule ;
l'obtention d'informations de position relative entre la ligne de voie et le véhicule ;
la recherche d'une quatrième position à laquelle la troisième position est mappée dans la carte ; et
la détermination d'une cinquième position dans la carte selon la quatrième position et les informations de position relative, et la création de la ligne de voie à la cinquième position.

9. Procédé selon la revendication 8, dans lequel la reconnaissance d'une ligne de voie à partir d'une image cible acquise par un appareil d'acquisition d'images du véhicule comprend :

la réalisation d'une transformation affine sur l'image cible en utilisant une matrice de transformation affine afin d'obtenir un graphe de transformation affine de l'image cible ; et
la détermination de lignes parallèles dans le graphe de transformation affine en tant que lignes de voie.

10. Procédé selon la revendication 9, dans lequel, dans le cas où les informations de position relative comprennent une distance relative entre la ligne de voie et le véhicule, l'obtention d'informations de position relative entre la ligne de voie et le véhicule comprend :

l'obtention d'une distance de pixel entre la ligne de voie et le véhicule dans le graphe de transformation affine ; et
la détermination de la distance relative entre la ligne de voie et le véhicule en utilisant un produit d'un facteur d'échelle de la transformation affine et de la distance de pixel.

11. Appareil de positionnement de ligne de voie, comprenant :

un module d'obtention (901) configuré pour obtenir des informations d'inertie, informations de déplacement cible et une première position d'un véhicule, les informations d'inertie étant des informations mesurées par une unité de mesure d'inertie du véhicule, les informations de déplacement cible étant des informations de déplacement du véhicule acquises à un premier instant, et la première position étant une position du véhicule au premier instant ; une première unité de détermination (903) configurée pour : déterminer une deuxième position selon les informations de déplacement cible et la première position, et déterminer une troisième position du véhicule à un deuxième instant sur la base des informations d'inertie du véhicule et de la deuxième position, le deuxième instant étant postérieur au premier instant ; et

une deuxième unité de détermination (905) configurée pour déterminer une position d'une ligne de voie dans une carte selon la troisième position et des informations de position relative, les informations de position relative étant utilisées pour indiquer une relation de position relative entre une ligne de voie détectée et le véhicule ;

dans lequel la deuxième unité de détermination (905) est configurée pour optimiser une trajectoire de déplacement correspondant à des deuxièmes positions consécutives du véhicule et corriger ensuite la position de la ligne de voie en maintenant une distance entre la ligne de voie et la trajectoire de déplacement optimisée inchangée lorsqu'un signal de système mondial de localisation, GPS, du véhicule pour fournir les informations de déplacement cible est obtenu.

12. Support de stockage stockant un programme qui, lorsqu'il est exécuté par un processeur, amène le processeur à mettre en œuvre le procédé selon l'une des revendications 1 à 10.

13. Dispositif électronique, comprenant :

une mémoire ;
un processeur ; et
un programme informatique qui est stocké sur la mémoire et qui est exécutable par le processeur, dans lequel le processeur est configuré pour exécuter le programme informatique pour effectuer le procédé selon l'une des revendications 1 à 10.

14. Produit de programme informatique comprenant une instruction qui, lorsqu'elle est exécutée sur un ordinateur, amène l'ordinateur à effectuer le procédé selon l'une des revendications 1 à 10.

Database 105

Terminal 103

Store or read

S202. Obtain inertial information, target traveling information, and a first position of a vehicle

Server 101

S206. Determine a position of a lane line in a map according to the third position and relative position information

S204. Determine a second position according to the target traveling information and the first position, and determine a third position of the vehicle based on the inertial information and the second position

**FIG. 1**

| Obtain inertial information, target traveling information and a first position of a vehicle | S202 |

↓

| Determine a second position according to the target traveling information and the first position, and determine a third position of the vehicle at a second time instant based on the inertial information of the vehicle and the second position, the second time instant being later than the first time instant | S204 |

↓

| Determine a position of a lane line in a map according to the third position and relative position information | S206 |

**FIG. 2**

$$\delta p \ \delta v \ \delta a$$

IMU $\xrightarrow{\omega_{ib}^b f_{ib}^b}$ INS

$p \ v \ a \ f_{ib}^b$

$P_{gps} V_{gps}$

GPS $\xrightarrow{}$ ⊗ $\xrightarrow{}$ EKF1

ODO $\xrightarrow{V_{odo}}$ ⊗ $\xrightarrow{}$ EKF2

$p \ v \ a$

$p v a \ f_{ib}^b$

**FIG. 3**

24

Lane line detection

**FIG. 4**

Affine transformation

**FIG. 5**

7.5 meters      3.1 meters      −0.7 meters      −4.5 meters

Vehicle

Lane line 1      Lane line 2      Lane line 3      Lane line 4

**FIG. 6**

$X_n$

$X_{n-1}$ $e_{n-1,n}$

$X'_n$

Pose observed by
differential GPS

$X1$ $e_{1,2}$ $X2$ $e_{2,3}$ $X3$ $e_{3,4}$ $X4$

Pose observed by
differential GPS

**FIG. 7**

FIG. 8

FIG. 9

Input/Output device 1007

Processor
1001

1005

Memory
1003

**FIG. 10**

**EP 3 842 755 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810949717
- CN 106525057 A